# EUROPEAN PATENT SPECIFICATION

(11) **EP 3 637 080 B1**
(45) Date of publication and mention of the grant of the patent: **03.03.2021**
(21) Application number: 19153820.6
(22) Date of filing: 25.01.2019
(51) Int. Cl.: G01M 3/22, G01M 3/38, G21C 17/00

(54) **LEAKAGE DETECTION SYSTEM AND LEAKAGE DETECTION METHOD**
LECKERKENNUNGSSYSTEM UND VERFAHREN ZUR LECKERKENNUNG
SYSTÈME DE DÉTECTION DE FUITE ET PROCÉDÉ DE DÉTECTION DE FUITE

(30) Priority: 11.10.2018 JP 2018192893
(43) Date of publication of application: 15.04.2020
(73) Proprietor: Mitsubishi Heavy Industries, Ltd., Chiyoda-ku Tokyo 100-8332 (JP)
(72) Inventor: DOBASHI, Shinsaku, TOKYO, 108-8215 (JP); SHOJI, Takashi, TOKYO, 150-0001 (JP); DOHI, Akira, TOKYO, 150-0001 (JP); OKA, Nobuki, TOKYO, 108-8215 (JP); TAKEUCHI, Yoshiaki, TOKYO, 108-8215 (JP); TSURUGA, Shigenori, TOKYO, 108-8215 (JP); NISHIMIYA, Tatsuyuki, TOKYO, 108-8215 (JP)
(74) Representative: Cabinet Beau de Loménie

(56) References cited:
- JP-A- H01 197 687
- JP-A- 2000 147 181
- JP-A- 2001 311 793

## Description

### Field

The present invention relates to a leakage detection system and a leakage detection method which are for detecting leakage of sodium in an air cooler for removing decay heat generated in a reactor internal by using sodium as a coolant.

### Background

For example, in a nuclear power plant including a sodium-cooled fast reactor (SFR), an air cooler of a decay heat removal system removes the decay heat generated in a reactor internal by using sodium as a coolant. When sodium is leaked into the air cooler of the decay heat removal system, it is preferable to quickly isolate gas including sodium to prevent the gas from being discharged to the environment. Consequently, a technology for detecting leakage of a coolant such as sodium has been known.

There is a known technology for detecting leakage in a nuclear power plant that uses an alkali metal such as sodium as a cooling metal and that is provided in an atmospheric gas containing nitrogen, by irradiating a sampling gas of the atmospheric gas with a pulse laser for breakdown, generating plasma emission by breaking down the sampling gas, and performing spectral analysis on the plasma emission using a spectroscope (for example, refer to Patent Literature 1).

### Citation List

### Patent Literature

Patent Literature 1: Japanese Patent No. 3510561 JP 2001311793 discloses a method of detecting leakage of coolant metal and leakage detector.
JP H01197687 discloses a remote detecting method for liquid leakage.

### Summary

### Technical Problem

According to Patent Literature 1, the sampling gas needs to be collected. According to Patent Literature 1, when leakage occurs locally, the leaked material may not be detected in the collected sample gas.

Moreover, when leakage of sodium is erroneously detected, the gas including sodium is casually isolated. Consequently, the cooling function of the decay heat removal system may be reduced.

The present invention has been made in view of the above circumstances, and an object of the present invention is to reduce erroneous detection of leakage of sodium.

### Solution to Problem

A leakage detection system of the present invention as defined by claim 1 is for detecting leakage of sodium in an air cooler in a decay heat removal system for removing decay heat generated in a reactor internal by using sodium as a coolant. The leakage detection system includes a detector configured to detect at least one of a sodium droplet and sodium aerosol in a flow path of air in the air cooler; a measurement unit configured to measure concentration of sodium in the air on a downstream side of the detector; and a determination unit configured to determine that leakage of sodium is detected, based on a detection result of the detector and a measurement result of the measurement unit.

With this system, it is possible to reduce erroneous detection of leakage of sodium.

In the leakage detection system, the determination unit may be configured to determine detection of leakage of sodium, when the detection result of the detector indicates that at least one of the sodium droplet and the sodium aerosol is detected and when the measurement result of the measurement unit indicates that the concentration of the sodium is equal to or more than a threshold concentration. With this system, it is possible to reduce erroneous detection of leakage of sodium.

The leakage detection system may further include a damper installed in a flow path of air on an upstream side or a downstream side of the air cooler in the decay heat removal system in which the air cooler is disposed, the damper being configured to open and close the flow path; and a damper control unit configured to control opening and closing of the damper. The damper control unit may close the damper when the determination unit determines that the leakage of sodium is detected. With this system, it is possible to reduce erroneous detection of leakage of sodium.

In the leakage detection system, the detector may be a camera configured to capture an image of the flow path of air in the air cooler. With this system, it is possible to reduce erroneous detection of leakage of sodium.

In the leakage detection system, the detector may be a visible camera configured to capture an image of the flow path of air in the air cooler or an infrared camera configured to capture a thermal imaging of the flow path of air in the air cooler. With this system, it is possible to reduce erroneous detection of leakage of sodium.

In the leakage detection system, the measurement unit may be a laser induced breakdown spectroscopy. With this system, it is possible to reduce erroneous detection of leakage of sodium.

In the leakage detection system, the measurement unit may be a scattering type of dust meter. With this system, it is possible to reduce erroneous detection of leakage of sodium.

According to claim 8, a leakage detection method is for detecting leakage of sodium in an air cooler for removing decay heat generated in a reactor internal by using sodium as a coolant. The leakage detection method includes detecting, by a detector, at least one of a sodium droplet and sodium aerosol in a flow path of air in the air cooler; measuring, by a measurement unit, concentration of sodium in the air on a downstream side of the detector; and determining that leakage of sodium is detected, based on a result of the detecting and a result of the measuring.

With this method, it is possible to reduce erroneous detection of leakage of sodium.

### Advantageous Effects of Invention

According to the present invention, it is possible to reduce erroneous detection of leakage of sodium. Brief Description of Drawings
FIG. 1 is a schematic diagram of a sodium-cooled fast reactor in which a leakage detection system of a first embodiment of the present invention is disposed.
FIG. 2 is an explanatory diagram of a decay heat removal system of the leakage detection system according to the first embodiment of the present invention.
FIG. 3 is a side view illustrating a first area of the leakage detection system according to the first embodiment of the present invention.
FIG. 4 is a plan view illustrating the first area of the leakage detection system according to the first embodiment of the present invention.
FIG. 5 is a block diagram for explaining the leakage detection system according to the first embodiment of the present invention.
FIG. 6 is a schematic diagram illustrating the first area and a second area of the leakage detection system according to the first embodiment of the present invention.
FIG. 7 is a diagram illustrating change in sodium concentration detected by the leakage detection system according to the first embodiment of the present invention.
FIG. 8 is a flowchart schematically illustrating a process of the leakage detection system according to the first embodiment of the present invention.
FIG. 9 is a schematic diagram illustrating a first area and a second area of a leakage detection system according to a second embodiment of the present invention.
FIG. 10 is a flowchart schematically illustrating a process of a leakage detection system according to a third embodiment of the present invention.
FIG. 11 is a diagram illustrating combinations of a detector and a measurement unit in the leakage detection system.

### Description of Embodiments

### First Embodiment

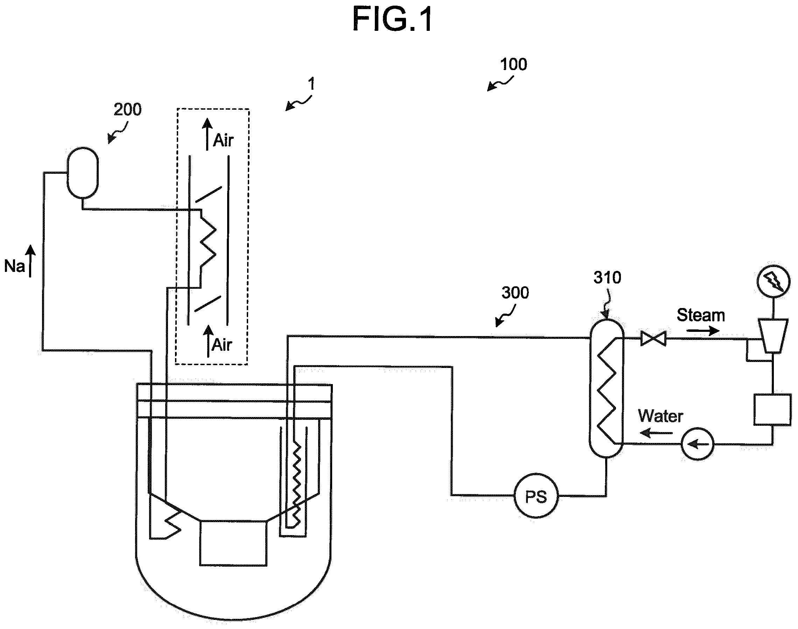

A nuclear power plant 100 including a sodium-cooled fast reactor 110 will now be described with reference to FIG. 1. FIG. 1 is a schematic diagram of a sodium-cooled fast reactor in which a leakage detection system of a first embodiment of the present invention is disposed. The sodium-cooled fast reactor 110 includes a decay heat removal system 200 having an air cooler 210, and a secondary intermediate cooling system 300 having an intermediate heat exchanger 310. The sodium-cooled fast reactor 110 transfers heat generated in the reactor internal to sodium in the secondary system, by transmitting the heat to the intermediate heat exchanger 310 of the secondary intermediate cooling system 300. The sodium-cooled fast reactor 110 then generates electric power by generating steam by sending the heat to a steam generator, and transmitting the steam to a turbo-generator.

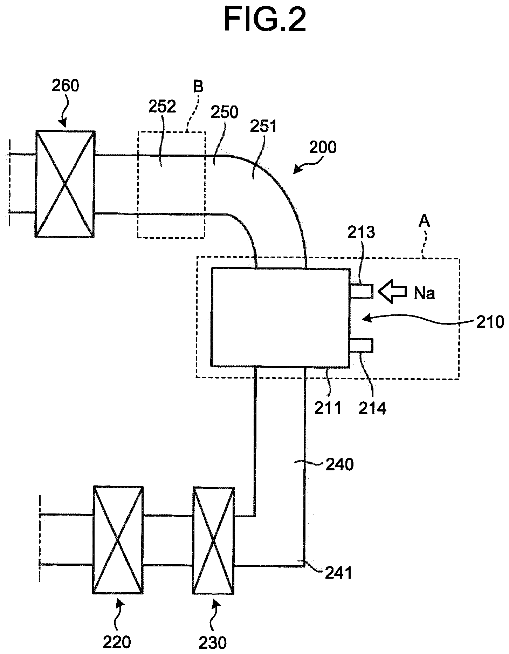

The decay heat removal system 200 will now be described with reference to FIG. 2. FIG. 2 is an explanatory diagram of a decay heat removal system of the leakage detection system according to the first embodiment of the present invention. The decay heat removal system 200 is a forced circulation type cooling system. The decay heat removal system 200 includes the air cooler 210, an air fan 220, an inlet damper 230, an elbow 240, an elbow 250, and an outlet damper 260.

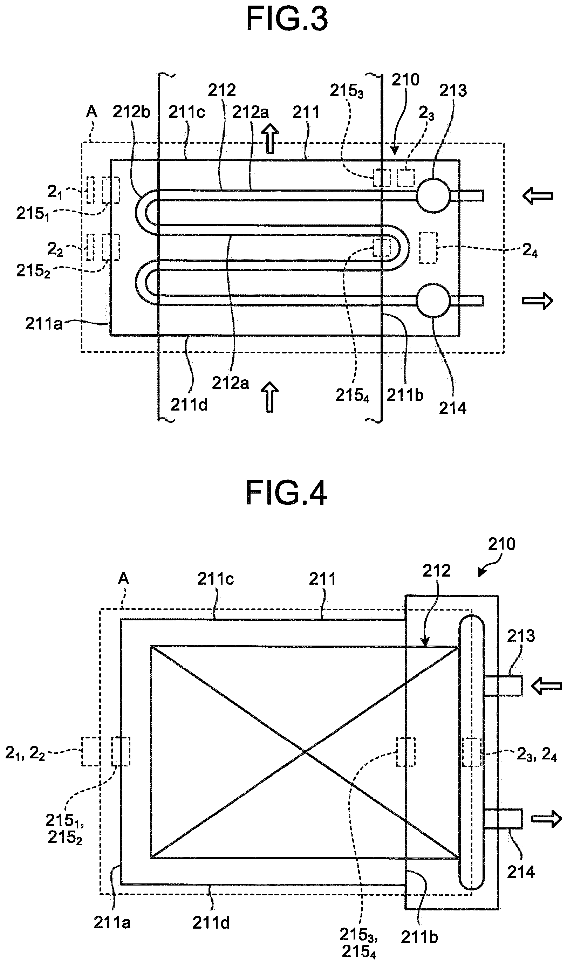

The air cooler 210 will now be described with reference to FIG. 3 and FIG. 4. FIG. 3 is a side view illustrating a first area of the leakage detection system according to the first embodiment of the present invention. FIG. 4 is a plan view illustrating the first area of the leakage detection system according to the first embodiment of the present invention. In the air cooler 210, sodium is used as a coolant. The air cooler 210 includes a casing 211 and a heat transfer pipe 212.

The casing 211 is formed in a box-shape. The casing 211 includes a pair of a wall 211a and a wall 211b that stand upright in parallel with the flowing direction of air and in parallel with a vertical direction, a pair of a wall 211c and a wall 211d that stand upright in an orthogonal direction of the wall 211a and the wall 211b, and a pair of walls, which are not illustrated, that are disposed in an orthogonal direction of the flowing direction of air and an orthogonal direction of the wall 211a. The wall 211a and the wall 211b are facing each other. The wall 211c and the wall 211d are facing each other. The heat transfer pipe 212 is disposed in the space inside the casing 211 formed in this manner. The space inside the casing 211 is a first area A.

The heat transfer pipe 212 is a pipe line through which sodium being a coolant circulates. In the casing 211, the heat transfer pipe 212 is continuously formed in a bending manner, with a plurality of straight portions 212a that extend straight in the flowing direction of air connected by a bent portion 212b. The inlet side of the heat transfer pipe 212 is connected to an inlet collection pipe 213, and the outlet side of the heat transfer pipe 212 is connected to an outlet collection pipe 214. The sodium that has flowed in from the inlet collection pipe 213 is distributed to each of a plurality of the heat transfer pipes 212. The sodium that has passed through each of the heat transfer pipes 212 flows out from the outlet collection pipe 214.

In the first area A, when sodium leaks from the heat transfer pipe 212, the sodium is reacted with air, and mist-like liquid droplets and white smoke-like aerosol generate in a mixed manner. In the first area A, when sodium leaks from the heat transfer pipe 212, mist-like liquid droplets and white smoke-like aerosol generate in a mixed manner. The temperature of the mist-like liquid droplets or the white smoke-like aerosol is higher by about 100 degrees Celsius than the temperature of air in a normal state when sodium is not leaked.

The air fan 220 is disposed on the upstream side of the air cooler 210 in the flow path of air in the decay heat removal system 200. The air fan 220 draws in the atmosphere.

The inlet damper 230 is disposed on the downstream side of the air fan 220 and the upstream side of the elbow 240 in the flow path of air in the decay heat removal system 200. The inlet damper 230 can open and close the flow path. When the inlet damper 230 is opened, the flow path is opened, and air can flow into the downstream side of the inlet damper 230. When the inlet damper 230 is closed, the flow path is closed, and air is prevented from flowing into the downstream side of the inlet damper 230.

The elbow 240 is disposed on the downstream side of the inlet damper 230 and the upstream side of the air cooler 210 in the flow path of air in the decay heat removal system 200. The elbow 240 changes the flowing direction of air by 90 degrees. More specifically, in FIG. 2, the elbow 240 changes the air flow from left to right direction to below to above direction in the upstream and downstream of a bending portion 241.

The elbow 250 is disposed on the downstream side of the air cooler 210 and on the upstream side of the outlet damper 260 in the flow path of air in the decay heat removal system 200. The elbow 250 includes a curved portion 251 and a straight portion 252. The elbow 250 changes the flowing direction of air by 90 degrees. More specifically, in FIG. 2, the elbow 250 changes the air flow from below to above direction to right to left direction in the upstream and downstream of the curved portion 251. The space inside the straight portion 252 of the elbow 250 is a second area B.

It is preferable that the second area B is separated from the first area A. In the second area B, when sodium leaks in the air cooler 210, the sodium is sufficiently diffused into the gas. In other words, the second area B is a complete mixing area of aerosol in which the concentration of the leaked sodium is uniform without unevenness. It is preferable that the second area B is separated from the outlet damper 260. It is preferable that the distance from the second area B to the outlet damper 260 is so that the time required for the leaked sodium to reach the outlet damper 260 from the second area B is longer than the time required from when the sodium concentration in the second area B is determined to be equal to or more than a threshold to when the outlet damper 260 is closed.

The outlet damper 260 is disposed on the downstream side of the elbow 250 in the flow path of air in the decay heat removal system 200. The outlet damper 260 can open and close the flow path. When the outlet damper 260 is opened, the flow path is opened, and air can flow into the downstream side of the outlet damper 260. When the outlet damper 260 is closed, the flow path is closed, and the air is prevented from flowing to the downstream side of the outlet damper 260.

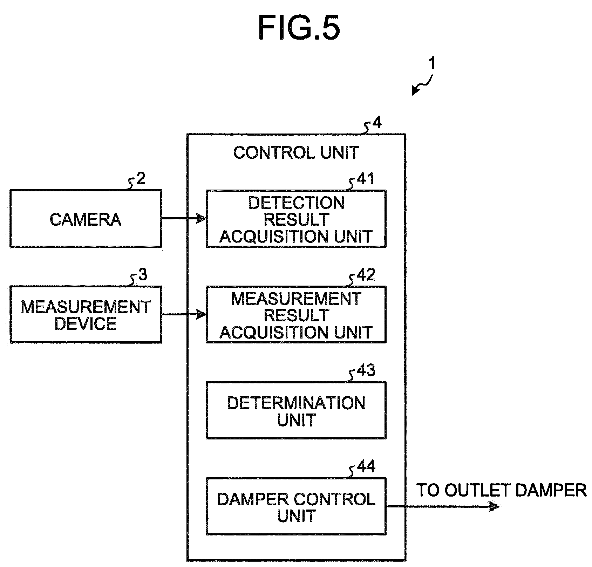

A leakage detection system 1 will now be described with reference to FIG. 5. FIG. 5 is a block diagram for explaining the leakage detection system according to the first embodiment of the present invention. The leakage detection system 1 detects a change of state of whether sodium is leaked into the first area A, and measures the quantitative value of sodium in the gas in the second area B. The leakage detection system 1 includes a camera (detector) 2, a measurement device (measurement unit) 3, and a control unit 4.

The camera 2 detects whether sodium is leaked into the first area A. In other words, the camera 2 detects a change of state in the first area A. The camera 2 detects the generation state of at least one of sodium droplets and the sodium aerosol in the first area A. The camera 2 captures an image of the flow path of air inside the air cooler 210. More specifically, the camera 2 captures an image of at least one of the sodium droplets and the sodium aerosol that are generated when sodium is leaked into the air cooler 210 and the sodium is reacted with moisture in the gas. For example, the camera 2 is a visible camera or an infrared camera. In the present embodiment, the camera 2 is the visible camera. The camera 2 outputs the imaged video to the control unit 4 as a detection result.

The camera 2 captures an image of the flow path of air inside the air cooler 210 in an imaging area in which the direction intersecting the flowing direction of air is the center of the range. It is preferable that a plurality of the cameras 2 are disposed so that a blind spot is not generated by the heat transfer pipe 212 disposed inside the air cooler 210. The camera 2 can detect the generation of mist-like liquid droplets or white smoke in the first area A included in the imaging range, in other words, the leakage of sodium without fail.

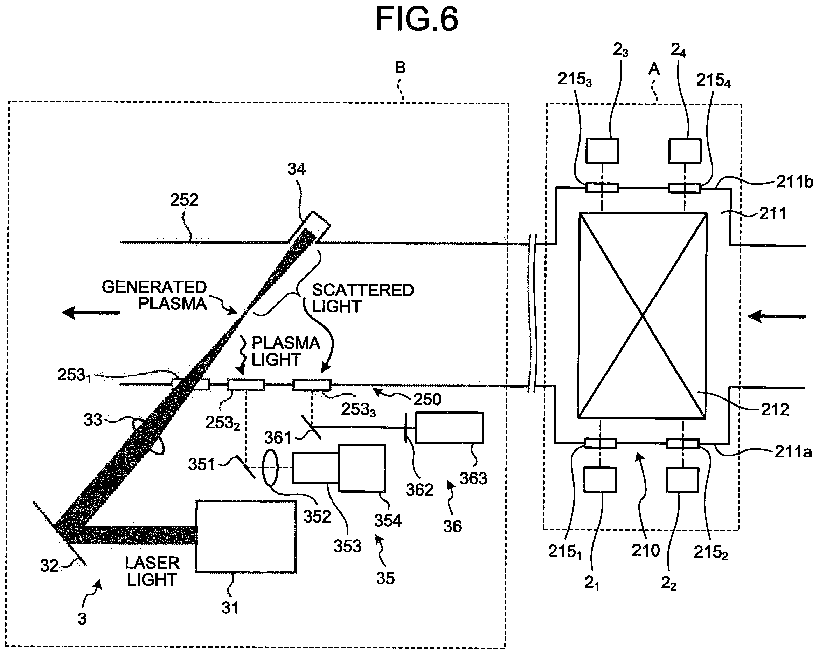

An example of arranging the cameras 2 will be described with reference to FIG. 6. FIG. 6 is a schematic diagram illustrating the first area and a second area of the leakage detection system according to the first embodiment of the present invention. In the present embodiment, there are a camera 2₁, a camera 2₂, a camera 2₃, and a camera 2₄. If there is no need to particularly distinguish the camera 2₁, the camera 2₂, the camera 2₃, and the camera 2₄, the camera 2₁₇ the camera 2₂, the camera 2₃, and the camera 2₄ are referred to as the camera 2. The optical axis of the camera 2 is disposed in parallel with the direction orthogonal to the flowing direction of air. The camera 2₁ is disposed outside a window portion 215₁ formed on the casing 211. The camera 2₁ captures an image of the flow path of air in the air cooler 210 through the window portion 215₁. The camera 2₁ captures an image around the outlet portion of the flow path of air inside the air cooler 210. The camera 2₂ is disposed outside a window portion 215₂ formed on the casing 211. The camera 2₂ captures an image of the flow path of air inside the air cooler 210 through the window portion 215₂. The camera 2₂ is disposed at the upstream side of the camera 2₁ and the camera 2₃. The camera 2₃ is disposed outside of a window portion 215₃ formed on the casing 211. The camera 2₃ captures an image of the flow path of air inside the air cooler 210 through the window portion 215₃. The camera 2₃ captures an image around the outlet portion of the flow path of air inside the air cooler 210. The camera 2₄ is disposed outside a window portion 215₄ formed on the casing 211. The camera 2₄ captures an image of the flow path of air inside the air cooler 210 through the window portion 215₄. The camera 2₄ is disposed on the upstream side of the camera 2₁ and the camera 2₃. The camera 2₁ and the camera 2₃ are disposed facing each other. The camera 2₂ and the camera 2₄ are disposed facing each other on the upstream side of the camera 2₁ and the camera 2₃. In this manner, each of the disposed cameras 2 is disposed so that the direction intersecting the flowing direction of the air is the center of the vision. Consequently, the camera 2 can include the entire area of the surface of the flow path of air inside the air cooler 210 that is orthogonal to the flowing direction of the air in the view. Thus, the detector formed by the cameras 2 can detect whether sodium is leaked to the entire area on the surface orthogonal to the flowing direction of the air.

Returning to FIG. 5, the measurement device 3 measures the sodium concentration in the gas in the second area B. The measurement device 3 measures the quantitative value of sodium in the second area B. More specifically, the measurement device 3 measures the sodium concentration in the gas on the downstream side of the air cooler 210. For example, the measurement device 3 is a laser induced breakdown spectroscopy (LIBS), a transmission type of dust meter, or a scattering type of dust meter. In the present embodiment, the measurement device 3 is the LIBS. The measurement device 3 transforms the object to be measured into plasma by laser light, and measures concentration of elemental composition by the light emitted from the plasma. The measurement device 3 emits laser light to the flow path of the air in the straight portion 252 of the elbow 250, and measures at a portion where the laser light passes through. In other words, the measurement device 3 measures the sodium in the measurement area provided in a straight manner in a direction intersecting the straight portion 252. Because the measurement device 3 measures at the straight portion 252 in the second area B, which is the complete mixing area, it is possible to highly accurately measure the sodium concentration. The measurement device 3 outputs the measurement result to the control unit 4. It is preferable that the measurement device 3 measures at a plurality of positions on the straight line on the surface intersecting the flowing direction of the air in the straight portion 252. However, the measurement device 3 may also measure at a single point.

An example of arranging the measurement device 3 will now be described with reference to FIG. 6. The measurement device 3 includes a laser device 31, a first mirror 32, a condensing lens 33, a beam damper 34, a sodium detector 35, and a dust detector 36. The laser device 31 oscillates laser light. The laser device 31 is disposed outside of the straight portion 252 of the elbow 250. The first mirror 32 is disposed facing the laser device 31. The first mirror 32 is disposed outside of the straight portion 252. The first mirror 32 reflects the laser light oscillated by the laser device 31. The condensing lens 33 is disposed facing the first mirror 32. The condensing lens 33 condenses the laser light reflected by the first mirror 32 inside the straight portion 252 in the main pipe through a window portion 253₁, and generates plasma from the condensing point to the beam damper 34. The laser light reflected by the first mirror 32 travels to a direction crossing the flowing direction of the fluid in the straight portion 252. The condensing lens 33 is disposed outside of the window portion 253₁ formed on the straight portion 252. The beam damper 34 is disposed facing the condensing lens 33 with the straight portion 252 interposed therebetween. The beam damper 34 is disposed on the straight portion 252. The sodium detector 35 detects plasma light. The dust detector 36 detects scattered light.

The sodium detector 35 detects the concentration of sodium. The sodium detector 35 is disposed outside of a window portion 253₂. The sodium detector 35 includes a second mirror 351, an achromatic lens 352, a spectroscope 353, and a photodetector 354. The plasma light passes through the second mirror 351, the achromatic lens 352, and the spectroscope 353, and is detected by the photodetector 354.

The dust detector 36 detects dust concentration. The dust detector 36 is disposed outside of a window portion 253₃. The dust detector 36 includes a third mirror 361, a filter 362, and a photodetector 363. The scattered light is reflected by the third mirror 361, from which plasma light is removed by the filter 362, and is detected by the photodetector 363.

The control unit 4 includes a memory and a central processing unit (CPU). The control unit 4 may be implemented by dedicated hardware. Alternatively, the function of the control unit 4 may be implemented by loading a computer program for implementing the function of the control unit 4 in the memory and executing the computer program. The control unit 4 includes a detection result acquisition unit 41, a measurement result acquisition unit 42, a determination unit 43, and a damper control unit 44.

The detection result acquisition unit 41 acquires at least one of detection results of the generation states of the sodium droplets and the sodium aerosol in the first area A. In the present embodiment, the detection result acquisition unit 41 acquires a video captured by the camera 2 as a detection result. The detection result acquisition unit 41 outputs the acquired detection result to the determination unit 43.

The measurement result acquisition unit 42 acquires the measurement result of the sodium concentration in the gas in the second area B. In the present embodiment, the measurement result acquisition unit 42 acquires a measurement result from the measurement device 3. The measurement result acquisition unit 42 outputs the acquired measurement result to the determination unit 43.

When at least one of the sodium droplets and the sodium aerosol is detected in the first area A on the basis of the detection result acquired by the detection result acquisition unit 41, the determination unit 43 determines detection of leakage of sodium. It is preferable that the determination unit 43 determines detection of leakage of sodium, when the concentration of sodium in the second area B is equal to or more than a threshold concentration on the basis of the measurement result acquired by the measurement device 3, in addition to detecting at least one of the sodium droplets and the sodium aerosol in the first area A. More specifically, it is preferable that the determination unit 43 determines detection of leakage of sodium, when an image of the mist-like liquid droplets or the white smoke is in a video of the first area A captured by the camera 2, and also when the concentration of sodium in the second area B is equal to or more than the threshold concentration. In the present embodiment, the threshold concentration is set to 2 mg/Nm³. The threshold concentration is set as a value greater than the concentration of sodium in a normal state around the nuclear power plant 100.

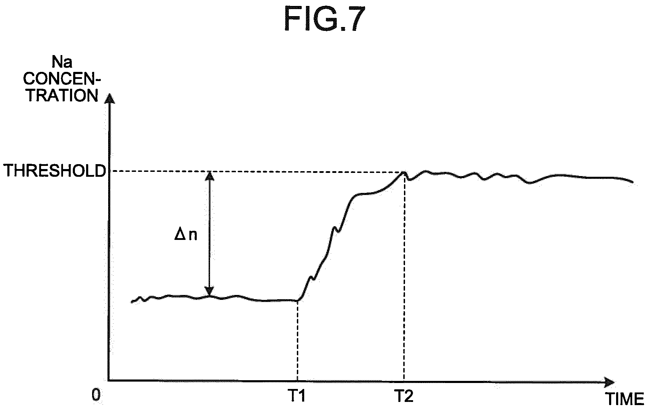

The concentration of sodium in the second area B will now be described with reference to FIG. 7. FIG. 7 is a diagram illustrating change in the sodium concentration detected by the leakage detection system according to the first embodiment of the present invention. T1 is time when at least one of the sodium droplets and the sodium aerosol is detected in the first area A. The sodium concentration in the second area B is equal to or less than a threshold and substantially constant up to time T1. The sodium concentration in the second area B is increased after time T1, and becomes equal to or more than the threshold and substantially constant in a while after time T2. In this manner, there is a time difference between time T1 when at least one of the sodium droplets and the sodium aerosol is detected in the first area A and time T2 when the sodium concentration in the second area B becomes equal to or more than the threshold. A difference Δn between the sodium concentration at time T1 and the threshold concentration is the concentration of the leaked sodium.

The damper control unit 44 controls the opening and closing of the inlet damper 230 or the outlet damper 260. More specifically, when the determination unit 43 determines detection of leakage of sodium, the damper control unit 44 controls to close the inlet damper 230 or the outlet damper 260. In the present embodiment, the damper control unit 44 controls the opening and closing of the outlet damper 260.

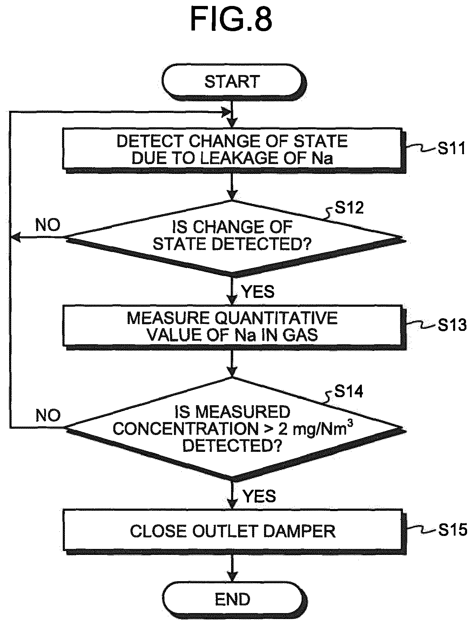

Next, a leakage detection method will be described with reference to FIG. 8. FIG. 8 is a flowchart schematically illustrating a process of the leakage detection system according to the first embodiment of the present invention. In the present embodiment, while the nuclear power plant 100 is being operated, the leakage detection system 1 continuously detects the leakage of sodium. While the leakage detection system 1 is activated, the camera 2 continuously captures images of the first area A, and the measurement device 3 continuously measures the concentration of sodium in the second area B.

The control unit 4 detects a change of state due to the leakage of sodium (step S11, detection process). More specifically, the control unit 4 acquires a video of the first area A captured by the camera 2 through the detection result acquisition unit 41.

The control unit 4 determines whether a change of state is detected (step S12, determination process). More specifically, when the determination unit 43 detects that the mist-like liquid droplets or the white smoke is in a video of the first area A captured by the camera 2, the control unit 4 determines that the change of state is detected (Yes at step S12). The control unit 4 then proceeds to step S13. When the determination unit 43 does not detect the mist-like liquid droplets or the white smoke is in the video of the first area A captured by the camera 2, the control unit 4 determines that the change of state is not detected (No at step S12). The control unit 4 then executes the process at step S11 again.

The control unit 4 measures the quantitative value of sodium in the gas (step S13). More specifically, the control unit 4 acquires the measurement result of the concentration of sodium in the second area B measured by the measurement device 3 through the measurement result acquisition unit 42.

The control unit 4 determines whether the measured concentration of 2 mg/Nm³ is detected (step S14). More specifically, when the determination unit 43 determines that the measured concentration is greater than 2 mg/Nm³ (Yes at step S14), the control unit 4 proceeds to step S15. When the determination unit 43 determines that the measured concentration is equal to or less than 2 mg/Nm³ (No at step S14), the control unit 4 executes the process at step S11 again.

The control unit 4 closes the outlet damper 260 (step S15). More specifically, the control unit 4 controls to close the outlet damper 260 through the damper control unit 44.

In this manner, when it is determined that the change of state is detected by detecting the generation of the mist-like liquid droplets or the white smoke in the first area A, and the concentration of sodium in the second area B is equal to or more than a threshold, the outlet damper 260 is closed.

As described above, in the present embodiment, when it is determined that the change of state is detected by detecting the generation of the mist-like liquid droplets or the white smoke in the first area A, and the concentration of sodium in the second area B is equal to or more than a threshold, the outlet damper 260 is closed. In this manner, in the present embodiment, the concentration of sodium in the second area B is measured, after determining that the leakage of sodium from the heat transfer pipe 212 to the first area A is detected. According to the present embodiment, it is possible to accurately detect the leakage of sodium.

For example, the measurement device 3 may erroneously measure sodium salt or sea salt particles in the dust, while measuring the concentration of sodium in the second area B. However, in the present embodiment, the concentration of sodium in the second area B is measured after detecting the change of state that is assumed to be the leakage of sodium in the first area A. Thus, for example, the possibility of erroneously measuring the sodium salt or sea salt particles in the dust can be reduced.

In the present embodiment, the generation of the mist-like liquid droplets or white smoke in the first area A is detected by the camera 2. In other words, according to the present embodiment, the leakage of sodium in the first area A included in the imaging range is detected by the camera 2 without fail. Moreover, in the present embodiment, the sodium concentration in the second area B, which is the complete mixing area, is highly accurately measured by the measurement device 3. In the present embodiment, the concentration of sodium in the second area B is measured after detecting the leakage of sodium in the first area A. In this manner, according to the present embodiment, it is possible to reduce erroneous detection of leakage of sodium. According to the present embodiment, it is possible to accurately detect the leakage of sodium.

According to the present embodiment, it is possible to detect the generation of the mist-like liquid droplets or the white smoke in the first area A included in the imaging range, in other words, the leakage of sodium by the camera 2 without fail. Moreover, according to the present embodiment, it is possible to highly accurately measure the sodium concentration because the measurement is performed by the measurement device 3 in the second area B, which is the complete mixing area. In this manner, according to the present embodiment, even if the leakage of sodium in the first area A occurs locally, it is possible to highly accurately detect the leakage of sodium in the first area A and the second area B.

According to the present embodiment, compared to when a sample gas is collected and measured, a sampling error does not occur. Consequently, it is possible to reduce erroneous detection of leakage of sodium.

In this manner, according to the present embodiment, it is possible to prevent the outlet damper 260 from being casually closed, because the erroneous detection of leakage of sodium is reduced. Consequently, according to the present embodiment, it is possible to suitably maintain the cooling function of the decay heat removal system 200. Moreover, according to the present embodiment, when there is a risk of leakage of sodium, it is possible to suitably restrict the air flow to the downstream side of the outlet damper 260, by closing the outlet damper 260.

### Second Embodiment

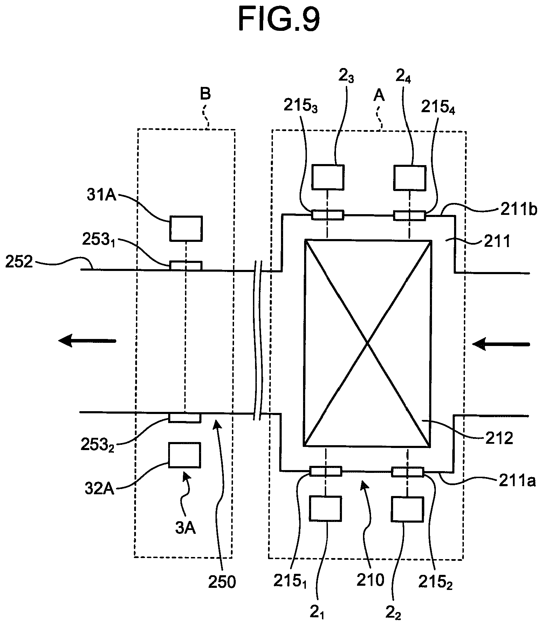

The leakage detection system 1 according to the present embodiment will now be described with reference to FIG. 9. FIG. 9 is a schematic diagram illustrating a first area and a second area of a leakage detection system according to a second embodiment of the present invention. In the present embodiment, a measurement device 3A is a scattering type of dust meter. The basic configuration of the leakage detection system 1 is the same as that in the first embodiment. In the following explanation, components the same as those in the first embodiment are designated by the same reference numerals or corresponding reference numerals, and the detailed description thereof will be omitted.

A measurement device (measurement unit) 3A includes a light transmitter 31A that transmits laser light and a light receiver 32A that receives laser light. The light transmitter 31A is disposed outside of the window portion 253₁ formed on the straight portion 252 of the elbow 250. The light receiver 32A is disposed outside of the window portion 253₁ formed on the straight portion 252. The light transmitter 31A and the light receiver 32A are disposed facing each other. When concentration of the sodium aerosol in the air is increased, the laser light oscillated by the light transmitter 31A is blocked by the sodium aerosol, thereby reducing the transmittance. Consequently, the amount of light received by the light receiver 32A will be reduced.

On the basis of the measurement result of the measurement device 3A, when the amount of light received by the light receiver 32A is reduced, the determination unit 43 can determine that the sodium aerosol in the second area B is increased.

As described above, according to the present embodiment, it is possible to measure the sodium concentration in the second area B by the measurement device 3A, which is the scattering type dust meter.

### Third Embodiment

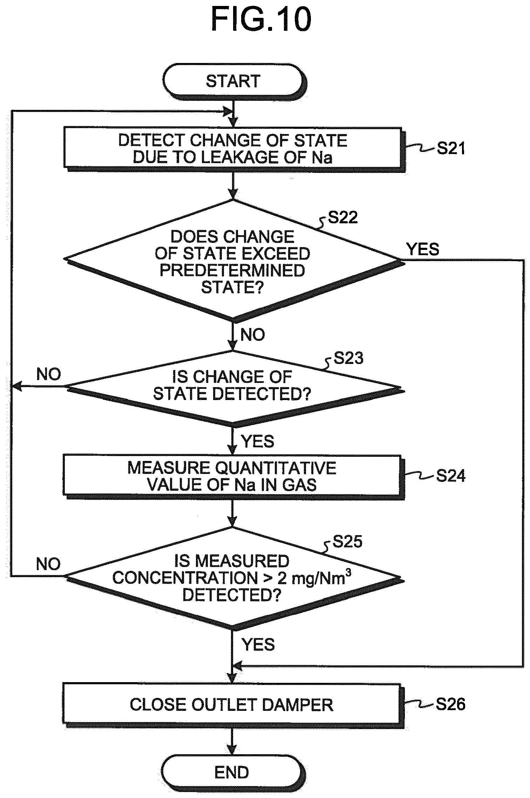

The leakage detection system 1 according to the present embodiment will now be described with reference to FIG. 10. FIG. 10 is a flowchart schematically illustrating a process of a leakage detection system according to a third embodiment of the present invention. In the present embodiment, the process of the control unit 4 is different from that in the first embodiment.

When a change of state detected in the first area A exceeds a predetermined state (threshold state), in other words, when a large change of state is detected in the first area A, the control unit 4 closes the outlet damper 260.

When the mist-like liquid droplets or the white smoke at a predetermined concentration or more is in a video of the first area A captured by the camera 2, the determination unit 43 determines that the change of state has exceeded a predetermined state. More specifically, the determination unit 43 may determine whether a change of state exceeds the predetermined state, by determining whether the color concentration of the mist-like liquid droplets or the white smoke in the video, the area occupied in the video, or the like exceeds the threshold. In this manner, the determination unit 43 detects a sudden leakage of sodium or a large leakage of sodium.

Next, a leakage detection method will be described with reference to FIG. 10. The processes at step S21 and from step S23 to step S26 illustrated in FIG. 10 are similar to the processes at step S11 and from step S12 to step S15 illustrated in FIG. 8.

The control unit 4 determines whether a change of state exceeds a predetermined state (step S22). More specifically, when the determination unit 43 detects that the mist-like liquid droplets or the white smoke of concentration at a predetermined state is generated more than the predetermined state in a video of the first area A captured by the camera 2, the control unit 4 determines that the change of state exceeds the predetermined state (Yes at step S22). The control unit 4 then proceeds to step S26. When the determination unit 43 does not detect that the mist-like liquid droplets or the white smoke of concentration at a predetermined state is generated more than the predetermined state in a video of the first area A captured by the camera 2, the control unit 4 determines that the change of state does not exceed the predetermined state (No at step S22). The control unit 4 then proceeds to step S23.

As described above, according to the present embodiment, when a change of state in the first area A is large, the outlet damper 260 is closed. According to the present embodiment, when there is a risk of sudden leakage of sodium or a large leakage of sodium, it is possible to close the outlet damper 260 and quickly restrict the air flow to the downstream side of the outlet damper 260.

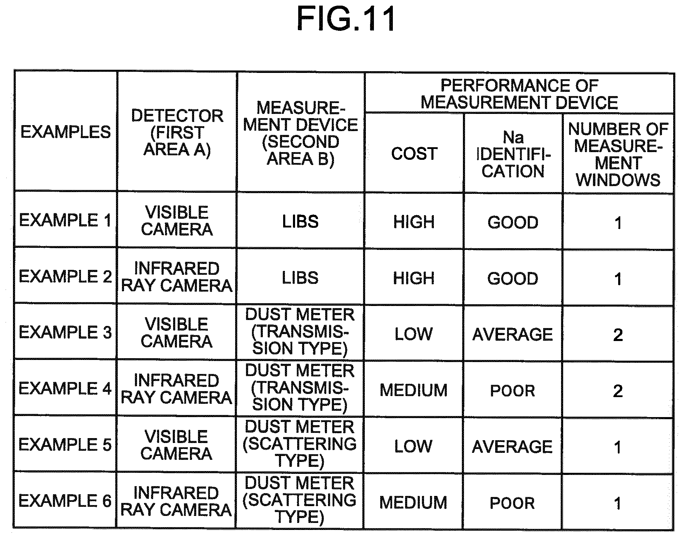

With the embodiments described above, the combination of the detector and the measurement device is not limited to the above. Examples of combinations of the detector and the measurement device will now be described with reference to FIG. 11. FIG. 11 is a diagram illustrating combinations of a detector and a measurement unit in the leakage detection system. Example 1 corresponds to the first embodiment. In Example 1, the detector is a visible camera and the measurement device is an LIBS. In Example 2, the detector is an infrared camera and the measurement device is an LIBS. In Example 3, the detector is a visible camera and the measurement device is a transmission type of dust meter. In Example 4, the detector is an infrared camera and the measurement device is a transmission type of dust meter. Example 5 corresponds to the second embodiment. In Example 5, the detector is a visible camera and the measurement device is a scattering type of dust meter. In Example 6, the detector is an infrared camera and the measurement device is a scattering type of dust meter. The cost is the highest when the LIBS is used as the detector. The cost is higher when the infrared camera is used as the detector, compared to when the visible camera is used as the detector. Because the LIBS measures the sodium itself, the LIBS can most accurately identify the sodium. The transmission type of dust meter and the scattering of type dust meter can similarly identify the sodium. The infrared camera detects the temperature change. The visible camera detects the scattering of aerosol. Reduction in the number of measurement windows contributes to prevention of optical axis deviation due to thermal expansion.

When the determination unit 43 determines detection of leakage of sodium, the damper control unit 44 may close the inlet damper 230. In this case, the inlet damper 230 is preferably disposed close to the first area A as much as possible, to reduce the air flowing to the downstream side after the leakage is detected.

### Reference Signs List

- 1: Leakage detection system

- 2: Camera (detector)
- 3: Measurement device (measurement unit)
- 4: Control unit
- 41: Detection result acquisition unit
- 42: Measurement result acquisition unit
- 43: Determination unit
- 44: Damper control unit
- 100: Nuclear power plant
- 110: Sodium-cooled fast reactor
- 200: Decay heat removal system
- 210: Air cooler
- 220: Air fan
- 230: Inlet damper
- 240: Elbow
- 250: Elbow
- 260: Outlet damper
- 300: Secondary intermediate cooling system

## Claims

1. A leakage detection system (1) for detecting leakage of sodium in an air cooler (210) in a decay heat removal system (200) for removing decay heat generated in a reactor internal by using sodium as a coolant, the leakage detection system (1), comprising:
a detector (2) configured to detect at least one of a sodium droplet and sodium aerosol in a flow path of air in the air cooler (210);
a measurement unit (3) configured to measure concentration of sodium in the air on a downstream side of the detector (2); and
a determination unit (43) configured to determine that leakage of sodium is detected, based on a detection result of the detector (2) and a measurement result of the measurement unit (3).

2. The leakage detection system (1) according to claim 1, wherein the determination unit (43) is configured to determine detection of leakage of sodium, when the detection result of the detector (2) indicates that at least one of the sodium droplet and the sodium aerosol is detected and when the measurement result of the measurement unit (3) indicates that the concentration of the sodium is equal to or more than a threshold concentration.

3. The leakage detection system (1) according to claim 1 or 2, further comprising:
a damper disposed in a flow path of air on an upstream side or a downstream side of the air cooler (210) in the decay heat removal system (200) in which the air cooler (210) is disposed, the damper being configured to open and close the flow path; and
a damper control unit (44) configured to control opening and closing of the damper, wherein
the damper control unit (44) closes the damper when the determination unit determines that the leakage of sodium is detected.

4. The leakage detection system (1) according to any one of claims 1 to 3, wherein the detector (2) is a camera configured to capture an image of the flow path of air in the air cooler (210).

5. The leakage detection system (1) according to any one of claims 1 to 3, wherein the detector (2) is a visible camera configured to capture an image of the flow path of air in the air cooler (210) or an infrared camera configured to capture a temperature of the flow path of air in the air cooler (210).

6. The leakage detection system (1) according to claim 1 or 2, wherein the measurement unit (3) is a laser induced breakdown spectroscopy.

7. The leakage detection system (1) according to claim 1 or 2, wherein the measurement unit (3) is a scattering type of dust meter.

8. A leakage detection method for detecting leakage of sodium in an air cooler (210) for removing decay heat generated in a reactor internal by using sodium as a coolant, the leakage detection method, comprising:
detecting, by a detector (2), at least one of a sodium droplet and sodium aerosol in a flow path of air in the air cooler (210);
measuring, by a measurement unit (3), concentration of sodium in the air on a downstream side of the detector (2); and
determining that leakage of sodium is detected, based on a result of the detecting and a result of the measuring.

## Patentansprüche

1. Leckagedetektionssystem (1) zum Detektieren von Natriumleckage in einem Luftkühler (210) in einem Zerfallswärmeabfuhrsystem (200) zum Abführen von in einem Reaktorinneren erzeugter Zerfallswärme durch Verwendung von Natrium als Kühlmittel, wobei das Leckagedetektionssystem (1) umfasst:
einen Detektor (2), der konfiguriert ist, um mindestens eines von einem Natriumtröpfchen und einem Natriumaerosol in einem Luftströmungsweg in dem Luftkühler (210) zu detektieren;
eine Messeinheit (3), die konfiguriert ist, um die Natriumkonzentration in der Luft auf einer stromabwärts gelegenen Seite des Detektors (2) zu messen; und
eine Bestimmungseinheit (43), die konfiguriert ist, um basierend auf einem Detektionsergebnis des Detektors (2) und einem Messergebnis der Messeinheit (3) zu bestimmen, dass eine Natriumleckage detektiert wird.

2. Leckagedetektionssystem (1) nach Anspruch 1, wobei die Bestimmungseinheit (43) konfiguriert ist, um die Detektion einer Natriumleckage zu bestimmen, wenn das Detektionsergebnis des Detektors (2) angibt, dass mindestens eines von dem Natriumtröpfchen und dem Natriumaerosol detektiert wird, und wenn das Messergebnis der Messeinheit (3) angibt, dass die Natriumkonzentration gleich oder größer als eine Schwellenkonzentration ist.

3. Leckagedetektionssystem (1) nach Anspruch 1 oder 2, ferner umfassend:
eine Klappe, die in einem Luftströmungsweg auf einer stromaufwärtigen Seite oder einer stromabwärtigen Seite des Luftkühlers (210) in dem Zerfallswärmeabfuhrsystem (200) angeordnet ist, in dem der Luftkühler (210) angeordnet ist, wobei die Klappe konfiguriert ist, um den Strömungsweg zu öffnen und zu schließen; und
eine Klappensteuereinheit (44), die konfiguriert ist, um das Öffnen und Schließen der Klappe zu steuern, wobei
die Klappensteuereinheit (44) die Klappe schließt, wenn die Bestimmungseinheit bestimmt, dass Natriumleckage detektiert wird.

4. Leckagedetektionssystem (1) nach einem der Ansprüche 1 bis 3, wobei der Detektor (2) eine Kamera ist, die konfiguriert ist, um ein Bild des Luftströmungswegs in dem Luftkühler (210) aufzunehmen.

5. Leckagedetektionssystem (1) nach einem der Ansprüche 1 bis 3, wobei der Detektor (2) eine Sichtkamera ist, die konfiguriert ist, um ein Bild des Luftströmungswegs im Luftkühler (210) aufzunehmen, oder eine Infrarotkamera ist, die konfiguriert ist, um eine Temperatur des Luftströmungswegs in dem Luftkühler (210) aufzunehmen.

6. Leckagedetektionssystem (1) nach Anspruch 1 oder 2, wobei die Messeinheit (3) eine Laser-Emissionsspektrokopie ist.

7. Leckagedetektionssystem (1) nach Anspruch 1 oder 2, wobei die Messeinheit (3) ein Staubmessgerät vom Streuungstyp ist.

8. Leckagedetektionsverfahren zum Detektieren von Natriumleckage in einem Luftkühler (210) zum Abführen von in einem Reaktorinneren erzeugter Zerfallswärme durch Verwendung von Natrium als Kühlmittel, wobei das Leckagedetektionsverfahren umfasst:
Detektieren, durch einen Detektor (2), von mindestens einem von einem Natriumtröpfchen und einem Natriumaerosol in einem Luftströmungsweg in dem Luftkühler (210);
Messen, durch eine Messeinheit (3), der Natriumkonzentration in der Luft auf einer stromabwärts gelegenen Seite des Detektors (2); und
Bestimmen, dass Natriumleckage detektiert wird, basierend auf einem Ergebnis des Detektierens und einem Ergebnis der Messung.

## Revendications

1. Système de détection de fuite (1) pour détecter une fuite de sodium dans un aéroréfrigérant (210) dans un système d'élimination de chaleur résiduelle (200) pour éliminer la chaleur résiduelle générée à l'intérieur d'un réacteur par utilisation de sodium en tant que réfrigérant, le système de détection de fuite (1) comprenant :
un détecteur (2) configuré pour détecter au moins l'un parmi une gouttelette de sodium et un aérosol de sodium dans le trajet d'écoulement de l'air dans le refroidisseur d'air (210) ;
une unité de mesure (3) configurée pour mesurer la concentration de sodium dans l'air du côté aval du détecteur (2) ; et
une unité de détermination (43) configurée pour déterminer qu'une fuite de sodium est détectée, sur la base du résultat de détection du détecteur (2) et du résultat de mesure de l'unité de mesure (3).

2. Système de détection de fuite (1) selon la revendication 1, dans lequel l'unité de détermination (43) est configurée pour déterminer la détection d'une fuite de sodium, quand le résultat de détection du détecteur (2) indique qu'au moins l'un parmi la gouttelette de sodium et l'aérosol de sodium est détecté, et quand le résultat de mesure de l'unité de mesure (3) indique que la concentration de sodium est égale ou supérieure à une concentration de seuil.

3. Système de détection de fuite (1) selon la revendication 1 ou 2, comprenant en outre :
un registre disposé dans un trajet d'écoulement d'air du côté amont ou du côté aval de l'aéroréfrigérant (210) dans le système d'élimination de chaleur résiduelle (200) dans lequel l'aéroréfrigérant (210) est disposé, le registre étant configuré pour ouvrir et fermer le trajet d'écoulement ; et
une unité de commande de registre (44) configurée pour commander l'ouverture et la fermeture du registre,
dans lequel l'unité de commande de registre (44) ferme le registre quand l'unité de détermination détermine qu'une fuite de sodium est détectée.

4. Système de détection de fuite (1) selon l'une quelconque des revendications 1 à 3, dans lequel le détecteur (2) est une caméra configurée pour capturer une image du trajet d'écoulement d'air dans l'aéroréfrigérant (210).

5. Système de détection de fuite (1) selon l'une quelconque des revendications 1 à 3, dans lequel le détecteur (2) est une caméra opérant dans le visible configurée pour capturer une image du trajet d'écoulement d'air dans l'aéroréfrigérant (210) ou une caméra opérant dans l'infrarouge configurée pour capturer la température du trajet d'écoulement d'air dans l'aéroréfrigérant (210).

6. Système de détection de fuite (1) selon la revendication 1 ou 2, dans lequel l'unité de mesure (3) est un spectroscope sur plasma induit par laser.

7. Système de détection de fuite (1) selon la revendication 1 ou 2, dans lequel l'unité de mesure (3) est un dispositif de mesure de poussière du type à diffusion.

8. Procédé de détection de fuite pour détecter une fuite de sodium dans un aéroréfrigérant (210) pour éliminer la chaleur résiduelle générée à l'intérieur d'un réacteur par utilisation de sodium en tant que réfrigérant, le procédé de détection de fuite comprenant :
la détection, par un détecteur (2), d'au moins l'un parmi une gouttelette de sodium et un aérosol de sodium dans le trajet d'écoulement de l'air dans le refroidisseur d'air (210) ;
la mesure, par une unité de mesure (3), de la concentration de sodium dans l'air du côté aval du détecteur (2) ; et
la détermination qu'une fuite de sodium est détectée, sur la base du résultat de la détection et du résultat de la mesure.
